# EUROPEAN PATENT SPECIFICATION

(11) **EP 0 920 969 B1**
(45) Date of publication and mention of the grant of the patent: **30.03.2005**
(21) Application number: 98850181.3
(22) Date of filing: 30.11.1998
(51) Int. Cl.: B29C 45/27

(54) **Injection molding means**
Spritzgiessvorrichtung
Dispositif de moulage par injection

(30) Priority: 05.12.1997 SE 9704540
(43) Date of publication of application: 09.06.1999
(73) Proprietor: N. Helldin AB, 532 23 Skara (SE)
(72) Inventor: Helldin, Carl Erik, 532 35 Skara (SE)
(74) Representative: Arwidi, Bengt

(56) References cited:
- EP-A- 0 453 894
- EP-A- 0 620 096
- H. BOPP: "Heisskanalsysteme für technische Thermoplaste" PLASTVERARBEITER., vol. 28, no. 12, 1977, pages 649-654, XP002096658 SPEYER/RHEIN DE
- PATENT ABSTRACTS OF JAPAN vol. 12, no. 442 (M-766), 21 November 1988 & JP 63 176119 A (TOYOTA MOTOR CORP), 20 July 1988

## Description

The present invention is for a sprue bushing for use at injection molding of thermoplastic materials with hot-runner in an equipment with sprue bushing.

This method is often used for tools which have several cavities for simultaneous molding of several pieces of goods. These are usually identical but may also be of different appearance. It is desirous both to reduce the loss of material as much as possible and to attain the shortest possible cycle times. Molds of this kind may be designed with a common inlet channel, a sprue, which branches into smaller runners, one for each cavity. In order to reduce the flow length in cold steel the sprue may be substituted for by a heated sprue bushing. Further improvements may be achieved by distributing the flow of material to two or more sprue bushings in a hot channel manifold. The best result is achieved if there is a n individual sprue bushing for each single mold cavity. The sprue bushing may also comprise a front piece and heating means and other details.

In order to keep the cycling times as short as possible and to avoid overheating of the plastic material it is desirous that the temperature of the material is maintained invariable and as low as possible. This is partly attained by the above described sprue bushings which are heated by electrical resistance elements on the outside of each bushing. The elements are so distributed over the surface that the possibly best temperature conditions are attained and control of the elements is by means of thermocouples or other temperature sensors. Further improvement is achieved by insulating the sprue bushings from surrounding metallic materials, where ceramic insulating material has proven to be suitable.

When injection molding using the above mentioned methods it is essential that the temperature of the material at the inlet to the mold cavity is high enough so that the material will low into and spread within the mold cavity, without being so high that the material will be damaged. At the same time it is desirous to keep the temperature low so that the material will solidify rapidly inside the mold so that the product may be discarded and another cycle of operation started.

The temperature a the tip of the ingot will then be crucial.

H. Bopp et al. disclose in "Heisskanalsysteme für technische Termoplaste", Plastverarbeiter, vol. 28, no. 12, 1997, p. 649-654, an injection moulding sprue bushing with an insert made of thermally insulating ceramic material. The ceramic is suitable for use under high wear conditions.

An object of the present invention is a sprue bushing which will further improve the possibilities to reduce the transfer of heat from the thermoplastic material to the material in and at the tip of the bushing. It is a further object to reduce the wear of the material of the bushing. This is achieved with a means and a sprue bushing which has the characteristics that are apparent from claim 1 and dependent claim 2.

The invention will below be described more in detail with reference to the embodiments that are shown in the enclosed drawings.

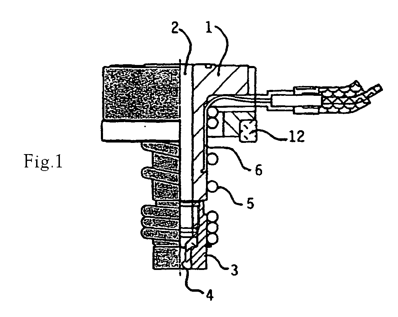

Figure 1 shows in partial cross-section a sprue bushing. (not part of the invention).
Figure 2 shows an embodiment of the front part of the sprue bushing.
Figure 3 shows the outer, front part of the bushing of figure 2.
Figure 4 shows an insert to the bushing of figure 3.
Figure 8 shows a further embodiment of the invention.

All figures are in full or partial cross-section.

The sprue bushing comprises a body 1 which preferably is made from steel. The body 1 is mounted into the mold and is thermally insulated from it by an insulating ring 12, preferably made from ceramic material. The bushing extends itself downwards in the direction of the figure inwards into the mold and terminates with a front piece 3, 7 which is fixed to the bushing body 1. The sprue bushing is heated by an electrical element 5 which is wound around the body of the bushing and the front piece, where the pitch of the winding is varied in order to achieve the possibly best heat distribution. The temperature is monitored and controlled by means of a thermocouple 6. The front piece has at the bottom surface which faces the mold an outlet opening or inlet 13 through which the thermoplastic material is pressed into the mold cavity.

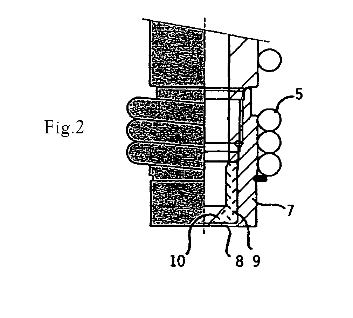

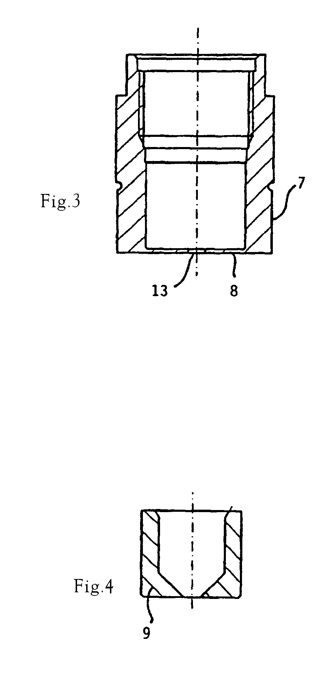

In order to further reduce the dissipation of heat to surrounding goods, increase the precision of the temperature of the material and increase the wear resistance of the sprue bushing it has, closest to the tip of the front piece at the outlet opening 13 in the embodiment of figures 2-4, an insert bushing 9 made from ceramic material. The sprue bushing and the front piece are in this case closest to mold delimited by a bottom 8 made from steel of the smallest possible goods thickness. The bottom 8 may be advantageous when heat is dissipated through it and the cooling of the material in the outlet opening is speeded up so that the time of the operating cycle may be reduced.

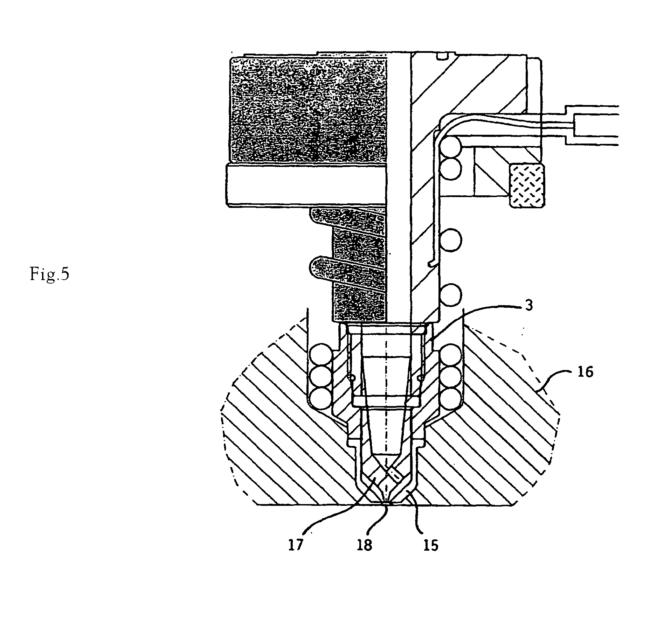

In the embodiment of the invention which is shown in figure 5 a ceramic bushing 15 is positioned in the mold 16. The front piece 3 has a lower part 17 which extends itself downwards to an opening 18 in the ceramic bushing and the mold into the mold cavity. The front piece 3 has a small direct contact surface at the mold 16 in order to obtain support of the bushing as required. In variations of this embodiment the ceramic bushing 15 may be extended upwards so far that there is no direct contact between metallic material of the sprue bushing/the front piece and the mold. The material flows through the front part 17 of the bushing into the channel which is defined by the inside of the ceramic bushing 15 and the lower defining surface at the tip of the front piece.

Other embodiments of the invention are possible within the frame of the inventive idea, especially in respect of the outer shape and the shape of the internal channel of the ceramic insert bushings. Also the tip of the sprue bushing and the front piece may be designed in various ways in order to be adapted to the ceramic inserts.

## Claims

1. Sprue bushing for injection molding of thermoplastic material comprising a front piece and inside which there is a flow channel for the thermoplastic material, at the outlet opening of the sprue bushing/front piece and the corresponding inlet of a mold cavity there is a bushing (4, 9, 15) made from thermally insulating ceramic material which is a part of the sprue bushing/front piece and comprises a contacting surface to contact with the wall of the mold cavity **characterized in that** the sprue bushing/front piece is defined against the mold cavity by a bottom (8) of metallic material.

2. Sprue bushing according to claim 1 **characterized in that** the ceramic bushing (15) is mounted into the mold (16) with at least one contacting surface to the sprue bushing/front piece (3).

## Patentansprüche

1. Angussbuchse zum Spritzgießen von Thermoplastmaterial, die ein Vorderteil umfasst und in derem Inneren ein Fließkanal für das Thennoplastmaterial vorhanden ist, wobei an der Auslassöffnung der Angussbuchse/des Vorderteils und dem entsprechenden Einlass eines Werkzeughohlraums eine aus wärmeisolierendem Keramikmaterial bestehende Buchse (4, 9, 15) vorhanden ist, die ein Teil der Angussbuchse/des Vorderteils ist und eine Kontaktfläche umfasst, die mit der Wand des Werkzeughohlraums in Kontakt kommt, **dadurch gekennzeichnet, dass** die Angussbuchseldas Vorderteil gegenüber dem Werkzeughohlraum durch einen Boden (8) aus Metallmaterial abgegrenzt ist.

2. Angussbuchse nach Anspruch 1, **dadurch gekennzeichnet, dass** die Keramikbuchse (15) in dem Werkzeug (16) mit wenigstens einer Kontaktfläche zu der Angussbuchseldem Vorderteil (3) angebracht ist.

## Revendications

1. Buse de moule pour réaliser un moulage par injection d'une matière thermoplastique, comprenant une pièce avant, et à l'intérieur de laquelle un canal d'écoulement est prévu pour la matière thermoplastique, une douille (4, 9, 15) étant positionnée à l'ouverture de sortie de la buse de moule/pièce avant et à l'entrée correspondante d'une cavité de moulage, ladite douille étant constituée d'une matière céramique thermiquement isolante et faisant partie de la buse de moule/pièce avant, et présentant une surface de contact destinée à entrer en contact avec la paroi de la cavité de moulage, **caractérisée en ce que** la buse de moule/pièce avant est définie contre la cavité de moulage par un fond (8) constitué d'une matière métallique.

2. Buse de moule selon la revendication 1, **caractérisée en ce que** la douille en céramique (15) est montée dans le moule (16) avec au moins une surface de contact vers la buse d'injection/pièce avant (3).
